(19) **Europäisches Patentamt**
**European Patent Office**
**Office européen des brevets**

(11) **EP 4 776 720 A1**

(12) **EUROPEAN PATENT APPLICATION**
published in accordance with Art. 153(4) EPC

(43) Date of publication:
**15.07.2026 Bulletin 2026/29**

(21) Application number: **24870829.9**

(22) Date of filing: **26.09.2024**

(51) International Patent Classification (IPC):
***H04W 72/0446*** (2023.01)

(52) Cooperative Patent Classification (CPC):
**H04W 72/0446; H04W 72/23; H04W 74/0833;
H04W 84/18**

(86) International application number:
**PCT/CN2024/121265**

(87) International publication number:
**WO 2025/067285 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311261031**

(71) Applicant: **HUAWEI TECHNOLOGIES CO., LTD.
Shenzhen, Guangdong 518129 (CN)**

(72) Inventors:
• **ZHU, Huiying**
  **Shenzhen, Guangdong 518129 (CN)**
• **DONG, Pengpeng**
  **Shenzhen, Guangdong 518129 (CN)**
• **WU, Fangzhou**
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57) This application provides a communication method and a communication apparatus. In the method, a terminal device sends, based on a first time domain resource, a preamble to a network device on a first RO that is in a first PRACH resource and that meets a first condition, where the first time domain resource includes a time domain resource used by the network device for at least one of data channel transmission or control channel transmission, the first condition is that a first time unit is in a first time window, the first time window is a window for monitoring a PDCCH that corresponds to an RAR that responds to the preamble, and the first time unit is a time unit that is in the first time domain resource and that can be used for transmission of the PDCCH corresponding to the RAR. In the method, the terminal device may select, based on the first time domain resource, an appropriate first RO from the first PRACH resource to initiate random access, to reduce a probability of random access failure of the terminal device caused by RAR window timeout. This method may be applied to an emergency ad hoc network.

FIG. 5

## Description

This application claims priority to Chinese Patent Application No. 202311261031.8, filed with the China National Intellectual Property Administration on September 27, 2023 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

In an existing cellular mobile communication system, terminal devices in various different use scenarios need to initiate random access (random access) in various scenarios. In a random access process, the terminal device may send, on one PRACH resource of a physical random access channel (physical random access channel, PRACH) resource set configured by a network device, a preamble (preamble) to the network device. Therefore, one PRACH resource is also referred to as a random access occasion (random access channel occasion, RO). After receiving the preamble on the RO, the network device sends, to the terminal device in a random access response (random access response, RAR) window corresponding to the RO, a physical downlink control channel (physical downlink control channel, PDCCH) for an RAR that responds to the preamble. Correspondingly, after sending the preamble, the terminal device also monitors, in the corresponding RAR window, the PDCCH for the RAR that responds to the preamble.

In some communication scenarios, to avoid interference, a plurality of network devices need to perform time division multiplexing on an air interface resource. For example, an available resource of a network device #1 is a system frame #1, an available resource of a network device #2 is a system frame #2, and an available resource of a network device #3 is a system frame #3. In this case, for each network device, some time domain resources are unavailable, causing a failure in random access of the terminal device.

## SUMMARY

Embodiments of this application provide a communication method and a communication apparatus, to reduce a probability of random access failure.

According to a first aspect, a communication method is provided. The method may be performed by a terminal device, or may be performed by a component (for example, a chip or a circuit) of the terminal device. This is not limited.

The method may include: receiving first indication information from a network device, where the first indication information indicates a first time domain resource, and the first time domain resource includes a time domain resource used by the network device for at least one of data channel transmission or control channel transmission; and sending a preamble to the network device on a first random access occasion RO, where the first RO is an RO that is in a first physical random access channel PRACH resource set and that meets a first condition, the first PRACH resource set includes a plurality of ROs, the first condition is that a first time unit is in a first time window, the first time window is a window for monitoring a physical downlink control channel PDCCH that corresponds to a random access response RAR that responds to the preamble, and the first time unit is a time unit that is in the first time domain resource and that can be used for transmission of the PDCCH corresponding to the RAR.

In the foregoing technical solution, the terminal device may select, based on the first time domain resource, an appropriate first RO from the first PRACH resource set to initiate random access, so that the terminal device can have an opportunity to receive, in an RAR window (that is, the first time window) corresponding to the first RO, a PDCCH that is sent by the network device and that corresponds to an RAR that responds to a preamble transmitted on the first RO, thereby reducing a probability of random access failure caused by RAR window timeout.

Optionally, in this application, the first time domain resource is used for the RAR and for transmission of the PDCCH for the RAR. The first time domain resource and the first PRACH resource set may completely or partially overlap, or may not overlap at all. In other words, a PRACH is neither a control channel nor a data channel.

In some implementations of the first aspect, the method further includes: determining the first RO based on the first indication information and the first PRACH resource set.

In some implementations of the first aspect, the first time domain resource is a resource that is periodically repeated in time domain, the first indication information indicates a pattern of the first time domain resource, and the pattern of the first time domain resource indicates a time domain resource used by the network device for at least one of data channel transmission or control channel transmission in a periodicity corresponding to the first time domain resource.

In the foregoing technical solution, signaling overheads of the network device can be reduced by directly indicating the pattern corresponding to the first time domain resource. For example, if there are three different time-frequency resource patterns, the network device may indicate, to the terminal device based on 2-bit information, the pattern corresponding to the first time domain resource.

In some implementations of the first aspect, the first indication information is carried in a master information block MIB message, a system information block SIB1 message, or a radio resource control RRC reconfiguration message.

In some implementations of the first aspect, the first PRACH resource set is a PRACH resource associated with a first synchronization signal block SSB, and the first SSB is an SSB corresponding to the terminal device or an SSB configured by the network device for the terminal device.

It may be understood that the first SSB is the SSB corresponding to the terminal device, indicating that the first SSB is any SSB that is in SSBs received by the terminal device and whose reference signal received power is greater than a corresponding threshold.

For example, the first SSB is an optimal SSB corresponding to the terminal device, and the optimal SSB is an SSB that is in the SSBs received by the terminal device and whose reference signal received power or signal strength is highest.

In some implementations of the first aspect, the first PRACH resource set is a PRACH resource determined based on a configuration from the network device.

According to a second aspect, a communication method is provided. The method may be performed by a network device, or may be performed by a component (for example, a chip or a circuit) of the network device. This is not limited.

The method includes: sending first indication information to a terminal device, where the first indication information indicates a first time domain resource, and the first time domain resource includes a time domain resource used by the network device for at least one of data channel transmission or control channel transmission; and receiving a preamble from the terminal device on a first random access occasion RO, where the first RO meets a first condition, the first condition is that a first time unit is in a first time window, the first time window is a window in which the terminal device monitors a downlink control channel PDCCH that corresponds to a random access response RAR that responds to the preamble, and the first time unit is a time unit that is in the first time domain resource and that can be used for transmission of the PDCCH corresponding to the RAR.

For beneficial effects of the second aspect, refer to the descriptions of the first aspect. Details are not described herein again.

In some implementations of the second aspect, the first time domain resource is a resource that is periodically repeated in time domain, the first indication information indicates a pattern of the first time domain resource, and the pattern of the first time domain resource indicates a time domain resource used by the network device for at least one of data channel transmission or control channel transmission in a periodicity corresponding to the first time domain resource.

In some implementations of the second aspect, the first indication information is carried in a master information block MIB message, a system information block SIB1 message, or a radio resource control RRC reconfiguration message.

According to a third aspect, a communication method is provided. The method may be performed by a terminal device, or may be performed by a component (for example, a chip or a circuit) of the terminal device. This is not limited.

The method may include: receiving first indication information from a network device, where the first indication information indicates a first time domain resource, and the first time domain resource includes a time domain resource used by the network device for at least one of data channel transmission or control channel transmission; sending a preamble to the network device on a first RO, where the first RO is an RO in a first PRACH resource set, and the first PRACH resource set includes a plurality of ROs; and monitoring, in a second time window, a downlink control channel PDCCH for a random access response RAR that responds to the preamble sent on the first RO, where a start location of the second time window is a start location of a first time unit, and the first time unit is a time unit that is after the first RO in the first time domain resource.

In the foregoing technical solution, a start location that is of an RAR window and that is specified in an existing standard is modified, and that a start location of a second RAR window is a start location of a time unit after the first RO in the first time domain resource is newly defined, so that the terminal device can have an opportunity to receive, in an RAR window (that is, the second time window) corresponding to the first RO, a PDCCH that is sent by the network device and that corresponds to an RAR that responds to a preamble transmitted on the first RO, thereby reducing a probability of random access failure caused by RAR window timeout.

In some implementations of the third aspect, a length of the second time window is a length of a configured RAR window.

In some implementations of the third aspect, the first time unit is a 1st time unit that is after the first RO in the first time domain resource.

In the foregoing technical solution, a specific method for determining a start location of an RAR window corresponding to an RO is provided, so that the terminal device can have an opportunity to receive, in the RAR window (that is, the second time window) corresponding to the first RO, the PDCCH that is sent by the network device and that corresponds to the RAR that responds to the preamble transmitted on the first RO, thereby reducing a probability of random access failure caused by RAR window timeout.

In some implementations of the third aspect, the first time unit is a $1^{st}$ time unit that is after the first RO in the first time domain resource and that can be used for transmission of the PDCCH for the RAR.

In the foregoing technical solution, another specific method for determining a start location of an RAR window corresponding to an RO is provided, so that the terminal device can have an opportunity to receive, in the RAR window (that is, the second time window) corresponding to the first RO, the PDCCH that is sent by the network device and that corresponds to the RAR that responds to the preamble transmitted on the first RO, thereby reducing a probability of random access failure caused by RAR window timeout.

In some implementations of the third aspect, the first time domain resource is a resource that is periodically repeated in time domain, the first indication information indicates a pattern of the first time domain resource, and the pattern of the first time domain resource indicates a time domain resource used by the network device for at least one of data channel transmission or control channel transmission in a periodicity corresponding to the first time domain resource.

In the foregoing technical solution, signaling overheads of the network device can be reduced by directly indicating the pattern corresponding to the first time domain resource. For example, if there are three different time-frequency resource patterns, the network device may indicate, to the terminal device based on 2-bit information, the pattern corresponding to the first time domain resource.

In some implementations of the third aspect, the first indication information is carried in a master information block MIB message, a system information block SIB1 message, or a radio resource control RRC reconfiguration message.

In some implementations of the third aspect, the first PRACH resource set is a PRACH resource associated with a first synchronization signal block SSB, and the first SSB is an SSB corresponding to the terminal device or an SSB configured by the network device for the terminal device.

It may be understood that the first SSB is an SSB corresponding to the terminal device, indicating that the first SSB is any SSB in SSBs received by the terminal device and whose reference signal received power is greater than a corresponding threshold.

For example, the first SSB is an optimal SSB corresponding to the terminal device, and the optimal SSB is an SSB that is in the SSBs received by the terminal device and whose reference signal received power or signal strength is highest.

In some implementations of the third aspect, the first PRACH resource set is a PRACH resource determined based on a configuration from the network device.

According to a fourth aspect, a communication method is provided. The method may be performed by a network device, or may be performed by a component (for example, a chip or a circuit) of the network device. This is not limited.

The method includes: sending first indication information to a terminal device, where the first indication information indicates a first time domain resource, and the first time domain resource includes a time domain resource used by the network device for at least one of data channel transmission or control channel transmission; receiving a preamble from the terminal device on a first random access occasion RO; and sending, to the terminal device in a second time window, a downlink control channel PDCCH for a random access response RAR that responds to the preamble, where a start location of the second time window is a start location of a first time unit, and the first time unit is a time unit that is after the first RO in the first time domain resource.

For beneficial effects of the fourth aspect, refer to the descriptions of the third aspect. Details are not described herein again.

In some implementations of the fourth aspect, a length of the second time window is a length of a configured RAR window.

In some implementations of the fourth aspect, the first time unit is a $1^{st}$ time unit that is after the first RO in the first time domain resource.

In some implementations of the fourth aspect, the first time unit is a $1^{st}$ time unit that is after the first RO in the first time domain resource and that can be used for transmission of the PDCCH for the RAR.

In some implementations of the fourth aspect, the first time domain resource is a resource that is periodically repeated in time domain, the first indication information indicates a pattern of the first time domain resource, and the pattern of the first time domain resource indicates a time domain resource used by the network device for at least one of data channel transmission or control channel transmission in a periodicity corresponding to the first time domain resource.

In some implementations of the fourth aspect, the first indication information is carried in a master information block MIB message, a system information block SIB1 message, or a radio resource control RRC reconfiguration message.

According to a fifth aspect, a communication method is provided. The method may be performed by a terminal device, or may be performed by a component (for example, a chip or a circuit) of the terminal device. This is not limited.

The method may include: receiving first information from a network device, where the first information indicates a first PRACH resource set and a time domain offset value, the first PRACH resource set includes a plurality of ROs, at least one corresponding second RO that is obtained by offsetting at least one first RO in the first PRACH resource set based on the time domain offset value meets a first condition, the first condition is that a first time unit is in a first time window, the first time window is a window in which the terminal device monitors a downlink control channel PDCCH that corresponds to a random access response RAR that responds to a preamble sent on the second RO, the first time unit is a time unit that is in a first time domain resource and that can be used for transmission of the PDCCH corresponding to the RAR, and the first time domain resource includes a time domain resource used by the network device for at least one of data channel transmission or control channel transmission; and sending a preamble to the network device on one of the at least one second RO.

Optionally, a corresponding second RO that is obtained by offsetting each first RO in the first PRACH resource set based on the time domain offset value meets the first condition.

In the foregoing technical solution, the network device adds a time domain offset configuration based on a configuration of the first PRACH resource set and based on a location of an available resource of the network device, to indicate the terminal device to initiate random access on corresponding ROs that are obtained by offsetting the ROs in the first PRACH resource set. When the terminal device sends a preamble on the second RO that is obtained based on a time domain offset, the terminal device can have an opportunity to receive, in an RAR window (that is, a second time window) corresponding to the second RO, a PDCCH that is sent by the network device and that corresponds to an RAR that responds to the preamble transmitted on the second RO, thereby reducing a probability of random access failure caused by RAR window timeout.

In some implementations of the fifth aspect, the method further includes: determining a second PRACH resource set, where the second RO is an RO in the second PRACH resource set, and the second PRACH resource set is a corresponding PRACH resource set that is obtained by offsetting the ROs in the first PRACH resource set based on a time domain offset value.

In some implementations of the fifth aspect, the time domain offset value includes a frame offset value $\Delta y$, where the frame offset value indicates to offset the ROs in the first PRACH resource set by $\Delta y$ system frames, and the $\Delta y$ is an integer; or the time domain offset value includes a subframe offset value $\Delta s$, where the subframe offset value indicates to offset the ROs in the first PRACH resource set by $\Delta s$ subframes, and the $\Delta s$ is an integer; or the time domain offset value includes a frame offset value $\Delta y$ and a subframe offset value $\Delta s$, where the frame offset value indicates to offset the ROs in the first PRACH resource set by $\Delta y$ system frames, the subframe offset value indicates to offset the ROs in the first PRACH resource set by $(s_n + \Delta s) \bmod 10$ subframes, the $s_n$ indicates subframes that the ROs in the first PRACH resource set are in, the $\Delta y$ is an integer, and the $\Delta s$ is an integer.

In some implementations of the fifth aspect, the first PRACH resource set is a part or all of a PRACH resource associated with a first synchronization signal block SSB, and the first SSB is an SSB configured by the network device for the terminal device.

In some implementations of the fifth aspect, the first PRACH resource set is a part of a PRACH resource configured by the network device for the terminal device.

According to a sixth aspect, a communication method is provided. The method may be performed by a network device, or may be performed by a component (for example, a chip or a circuit) of the network device. This is not limited.

The method includes: sending first information to a terminal device, where the first information indicates a first physical random access channel PRACH resource set and a time domain offset value, the first PRACH resource set includes a plurality of random access occasions ROs, at least one corresponding second RO that is obtained by offsetting at least one first RO in the first PRACH resource set based on the time domain offset value meets a first condition, the first condition is that a first time unit is in a first time window, the first time window is a window in which the terminal device monitors a downlink control channel PDCCH that corresponds to a random access response RAR that responds to a preamble sent on the second RO, the first time unit is a time unit that is in a first time domain resource and that can be used for transmission of the PDCCH corresponding to the RAR, and the first time domain resource includes a time domain resource used by the network device for at least one of a data channel transmission or a control channel transmission; and receiving a preamble from the terminal device on one of the at least one second RO.

Optionally, a corresponding second RO that is obtained by offsetting each first RO in the first PRACH resource set based on a time domain offset value meets the first condition.

For beneficial effects of the sixth aspect, refer to the descriptions in the fifth aspect. Details are not described herein again.

In some implementations of the sixth aspect, the method further includes: determining a second PRACH resource set, where the second RO is an RO in the second PRACH resource set, and the second PRACH resource set is a corresponding PRACH resource set that is obtained by offsetting the ROs in the first PRACH resource set based on the time domain offset value.

In some implementations of the sixth aspect, the time domain offset value includes a frame offset value $\Delta y$, where the frame offset value indicates to offset the ROs in the first PRACH resource set by $\Delta y$ system frames, and the $\Delta y$ is an integer; or the time domain offset value includes a subframe offset value $\Delta s$, the subframe offset value indicates to offset the ROs in the first PRACH resource set by $\Delta s$ subframes, and the $\Delta s$ is an integer; or the time domain offset value includes a frame offset value $\Delta y$ and/or a subframe offset value $\Delta s$, where the frame offset value indicates to offset the ROs in the first PRACH resource set by $\Delta y$ system frames, the subframe offset value indicates to offset the ROs in the first PRACH resource set by $(s_n + \Delta s) \bmod 10$ subframes, the $s_n$ indicates subframes that the ROs in the first PRACH resource set are in,

the $\Delta y$ is an integer, and the $\Delta s$ is an integer.

In some implementations of the sixth aspect, the first PRACH resource set is a part or all of a PRACH resource associated with a first synchronization signal block SSB, and the first SSB is an SSB configured by the network device for the terminal device.

In some implementations of the sixth aspect, the first PRACH resource set is a part of a PRACH resource configured by the network device for the terminal device.

According to a seventh aspect, a communication apparatus is provided. The apparatus is configured to perform the method provided in the first aspect, the third aspect, or the fifth aspect. Specifically, the apparatus may include a unit and/or a module, for example, a processing unit and/or a communication unit, configured to perform the method according to any one of the first aspect, the third aspect, or the fifth aspect, or any one of the possible implementations of the first aspect, the third aspect, or the fifth aspect.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eighth aspect, a communication apparatus is provided. The apparatus is configured to perform the method provided in the second aspect, the fourth aspect, or the sixth aspect. Specifically, the apparatus may include a unit and/or a module, for example, a processing unit and/or a communication unit, configured to perform the method according to any one of the second aspect, the fourth aspect, or the sixth aspect, or any one of the possible implementations of the second aspect, the fourth aspect, or the sixth aspect.

In an implementation, the apparatus is a network device. When the apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a ninth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, to cause the communication apparatus to perform the method according to any one of the first aspect, the third aspect, or the fifth aspect, or any one of the possible implementations of the first aspect, the third aspect, or the fifth aspect.

In an implementation, the apparatus is a terminal device.

In another implementation, the apparatus is a chip, a chip system, or a circuit used in a terminal device.

According to a tenth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, to cause the communication apparatus to perform the method according to any one of the second aspect, the fourth aspect, or the sixth aspect, or any one of the possible implementations of the second aspect, the fourth aspect or the sixth aspect.

In an implementation, the apparatus is a network device.

In another implementation, the apparatus is a chip, a chip system, or a circuit used in a network device.

According to an eleventh aspect, a processor is provided, configured to perform the methods provided in the foregoing aspects.

Operations such as sending and obtaining/receiving related to the processor may be understood as operations such as output, receiving, or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable storage medium stores program code executed by a device, and the program code is used to perform the method according to any one of the first aspect to the sixth aspect or any one of the possible implementations of the first aspect to the sixth aspect.

According to a thirteenth aspect, a computer program product including instructions is provided. When the computer program product runs on a computer, the computer is caused to perform the method according to any one of the first aspect to the sixth aspect and any one of the possible implementations of the first aspect to the sixth aspect.

According to a fourteenth aspect, a chip is provided. The chip includes a processor and a communication interface. The processor reads, through the communication interface, instructions stored in a memory, to perform the method according to any one of the first aspect to the sixth aspect or any one of the possible implementations of the first aspect to the sixth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the first aspect to the sixth aspect or any one of the possible implementations of the first aspect to the sixth aspect.

According to a fifteenth aspect, a communication system is provided. The communication system includes the communication apparatuses according to the ninth aspect and the tenth aspect.

**BRIEF DESCRIPTION OF DRAWINGS**

FIG. 1 is a diagram of a communication system according to an embodiment of this application;
FIG. 2 is a diagram of an IAB network topology applicable to an embodiment of this application;
FIG. 3 is a schematic flowchart of one contention-based random access attempt;
FIG. 4 is a diagram of distribution of a configured PRACH resource in time domain;
FIG. 5 is a schematic flowchart of a communication method 500 according to this application;
FIG. 6 is a diagram of patterns of a plurality of different time domain resources;
FIG. 7 is a diagram of determining, according to the method 500, an RO on which random access can be initiated;
FIG. 8 is a schematic flowchart of a communication method 800 according to this application;
FIG. 9 is a diagram of determining, according to the method 800, RAR time windows corresponding to ROs;
FIG. 10 is a schematic flowchart of another communication method 1000 according to this application;
FIG. 11 is a diagram of offsetting ROs in a first PRACH resource in time domain according to the method 1000;
FIG. 12 is a block diagram of a communication apparatus 200 according to an embodiment of this application; and
FIG. 13 is a block diagram of a communication apparatus 300 according to an embodiment of this application.

**DESCRIPTION OF EMBODIMENTS**

The following describes the technical solutions of embodiments in this application with reference to the accompanying drawings.

Before embodiments of this application are described, the following several descriptions are first provided.

1. In descriptions of embodiments of this application, unless otherwise specified, "a plurality of" means two or more.

2. In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

3. Various numbers in this application are merely used for distinguishing for ease of description, and are not used to limit the scope of this application. Sequence numbers in this application do not mean an execution sequence, and the execution sequence of the processes should be determined based on functions and internal logic of the processes. For example, in the specification, claims, and accompanying drawings of this application, the terms "first", "second", "third", "fourth", and various other terms and numbers (if there is any), are used to distinguish between similar objects, but are not intended to limit sizes, content, an order, a time sequence, priorities, importance, or the like of a plurality of objects. For example, the first information and second information do not indicate a difference in an information amount, content, a priority, importance, or the like.

4. Terms "include", "have" and any variants thereof are intended to cover a non-exclusive inclusion. For example, a process, a method, a system, a product, or a device that includes a series of steps or units is not necessarily limited to those steps or units that are expressly listed, but may include another step or unit that is not expressly listed or that is inherent to the process, the method, the product, or the device.

5. In embodiments of this application, that "a network element A sends information A to a network element B" may be understood as that a destination end of the information A or an intermediate network element in a transmission path toward the destination end is the network element B, and may include directly or indirectly sending information to the network element B. That "the network element B receives the information A from the network element A" may be understood as that a source end of the information A or an intermediate network element in a transmission path from the source end is the network element A, and may include directly or indirectly receiving information from the network element A. Necessary processing, for example, a format change, may be performed on the information between the source end and the destination end for information sending. However, the destination end may understand valid information from the source end. Similar descriptions in this application may be understood in a similar manner. Details are not described herein.

In other words, sending and receiving may be performed between devices, for example, between a terminal device #1 and a terminal device #2, or may be performed inside a device, for example, sending or receiving may be performed between components, modules, chips, software modules, or hardware modules inside the device through a bus, a trace, or an interface.

6. In embodiments of this application, indication includes a direct indication (also referred to as an explicit indication) and an implicit indication. Direct indication of information A means including the information A. Implicit indication of the information A means indicating the information A by directly indicating information B and based on a correspondence between the information A and the information B. The correspondence between the information A and the information B may be predefined, prestored, pre-burned, or pre-configured.

7. In embodiments of this application, that information C is used to determine information D includes both of the following two cases: The information D is determined based only on the information C, and the information D is determined based on the information C and other information. In addition, that the information C is used to determine the information D may further include a case of indirect determining, for example, a case in which the information D is determined based on information E, and the information E is determined based on the information C.

8. The term "store" or "preserve" in embodiments of this application may mean being stored in one or more memories. The one or more memories may be separately disposed, or may be integrated into an encoder, a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

9. The "protocol" in embodiments of this application may be a standard protocol in the communication field, for example, may include a 4th generation (4th generation, 4G) network protocol/a 5th generation (5th generation, 5G) network protocol, a new radio (new radio, NR) protocol, and a related protocol applied to a future communication system. This is not limited in this application.

10. Arrows or blocks shown in dashed lines in the diagrams of the accompanying drawings in the specification of this application indicate optional steps or optional modules.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In the present disclosure, the device is used as an example for description. For example, the communication system may include at least one terminal device and at least one network device. The network device may send a downlink signal to the terminal device, and/or the terminal device may send an uplink signal to the network device. It may be understood that the terminal device in the present disclosure may be replaced with a first device, the network device may be replaced with a second device, and the first device and the second device perform the corresponding communication method in the present disclosure.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, or a terminal device in a future evolved public land mobile communication network (public land mobile network, PLMN). This is not limited in embodiments of this application.

By way of example but not limitation, in embodiments of this application, the terminal device may be a part that is of the network device and that is configured to implement a function of the terminal device. For example, the network device may be an integrated access backhaul (integrated access and backhaul, IAB) node (node), and the IAB node integrates two parts: a mobile terminal (mobile termination, MT) and a distributed unit (distributed unit, DU), or integrates an MT and a base station (base station, BS), where the BS includes a CU and a DU. When facing a parent node of the IAB node, the IAB node may be considered as a terminal. In this case, the IAB node plays a role of the MT.

By way of example but not limitation, in embodiments of this application, the terminal device may alternatively be a wearable device. The wearable device may also be referred to as an intelligent wearable device, and is a general term for wearable devices, such as glasses, gloves, a watch, clothing, and shoes, that are developed through smart design of daily wear by using a wearable technology. The wearable device is a portable device that can be directly worn on a body or integrated into clothes or accessories of a user. The wearable device is a hardware device, and also implements a powerful function through software support, data exchange, and cloud interaction. In a broad sense, the intelligent wearable device includes a full-featured and large-sized device, for example, a smartwatch or smart glasses, that can implement complete or partial functions without depending on a smartphone, and a device, for example, various smart bands or smart jewelry used for vital sign monitoring, that is dedicated to only one type of application function and that needs to be used in cooperation with another device like the smartphone.

In embodiments of this application, an apparatus configured to implement a function of the terminal device may be a terminal device, or may be an apparatus, for example, a chip system, that can support the terminal device in implementing the function. The apparatus may be installed in the terminal device or used in cooperation with the terminal device. In embodiments of this application, the chip system may include a chip, or may include a chip and another discrete device. In embodiments of this application, an example in which the apparatus configured to implement the function of the terminal device is a terminal device is merely used for description, and does not constitute a limitation on the solutions of embodiments of this application.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following names in a broad sense, or may be replaced with the following names: for example, a NodeB (NodeB), an evolved NodeB (evolved NodeB, eNB), a next generation NodeB (next generation NodeB, gNB), a relay station, an IAB node (for example, a part for a BS function in the IAB node), an access point, a transmission point (transmitting and receiving point, TRP), a transmitting point (transmitting point, TP), a master station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), or a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that functions as a base station in D2D communication, V2X communication, and M2M communication, a network-side device in a 6G network, a device that functions as a base station in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application.

In some deployments, the network device mentioned in embodiments of this application may be a device including a CU, a DU, or a CU and a DU, or a device including a CU-control plane (central unit-control plane (central unit-control plane, CU-CP)) node, a CU-user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes work together to assist the terminal in implementing radio access, and different RAN nodes separately implement some functions of the base station. For example, the RAN node may be a CU, a DU, a CU-CP, a CU-UP, an RU, or the like. The CU and the DU may be separately disposed, or may be included in a same network element, for example, the BBU. The RU may be included in a radio frequency device or a radio frequency unit, for example, included in the RRU, the AAU, or the RRH.

The RAN node may support one or more types of fronthaul interfaces, and different fronthaul interfaces respectively correspond to DUs and RUs with different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, compared with the CPRI, some downlink and/or uplink baseband functions are implemented. For example, for the downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for the uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of division into the DU and the RU correspond to eCPRIs of different categories (categories, Cats), for example, eCPRI Cat A, B, C, D, E, and F.

The eCPRI Cat A is used as an example. For downlink transmission, division is performed based on layer mapping. The DU is configured to implement layer mapping and one or more functions before layer mapping (that is, one or more of encoding, rate matching, scrambling, modulation, and layer mapping), and other functions (for example, one or more of RE mapping, digital beamforming (beamforming, BF), or inverse fast Fourier transform (inverse fast Fourier transform, IFFT)/cyclic prefix (cyclic prefix, CP) addition) after layer mapping are moved to the RU for implementation. For uplink transmission, division is performed based on RE demapping. The DU is configured to implement demapping and one or more functions before demapping (that is, one or more functions of decoding, de-rate matching, descrambling, demodulation, inverse discrete Fourier transform (inverse discrete Fourier transform, IDFT), channel equalization, and RE demapping), and other functions (for example, one or more of digital BF or fast Fourier transform (FFT)/CP removal) after demapping are moved to the RU for implementation. It may be understood that, for function descriptions of DUs and RUs corresponding to eCPRIs of various categories, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, and a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. In this application, any one of the CU (or the CU-CP and the CU-UP), the DU, and the RU may be implemented by using a software module, a hardware module, or a combination of a software module and a hardware module.

In embodiments of this application, an apparatus configured to implement the function of the network device may be a network device, or may be an apparatus, for example, a chip system, a hardware circuit, a software module, or a combination of a hardware circuit and a software module, that can support the network device in implementing the function. The apparatus may be installed in the network device or used in cooperation with the network device. In embodiments of this application, an example in which the apparatus configured to implement the function of the network device is a network device is merely used for description, and does not constitute a limitation on the solutions of embodiments of this application.

The network device and/or the terminal device may be deployed on the land, including an indoor device, an outdoor device, a handheld device, or a vehicle-mounted device; or may be deployed on a water surface; or may be deployed on an airplane, a balloon, and a satellite in the air. Scenarios of the network device and the terminal device are not limited in embodiments of this application. In addition, the terminal device and the network device may be hardware devices; or may be software functions run on dedicated hardware or software functions run on general-purpose hardware, for example, virtualized functions instantiated on a platform (for example, a cloud platform); or may be entities including a dedicated or general-purpose hardware device and a software function. Specific forms of the terminal device and the network device are not limited in this application.

The system architectures and the service scenarios described in embodiments of this application are intended to describe the technical solutions of embodiments of this application more clearly, and do not constitute a limitation on the technical solutions provided in embodiments of this application. A person of ordinary skill in the art may learn that, with the evolution of the network architectures and the emergence of a new service scenario, the technical solutions provided in embodiments of this application are also applicable to similar technical problems.

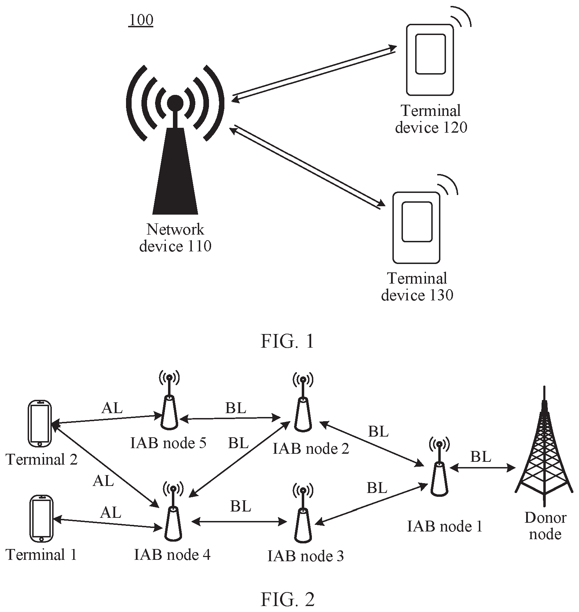

FIG. 1 is a diagram of a communication system according to an embodiment of this application. A communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 through a radio link, to exchange information. Communication devices in the communication system, for example, the network device 110 and the terminal device 120, may communicate with each other by using a multi-antenna technology. It may be understood that, the network device and the terminal device may also be referred to as communication devices.

This embodiment of this application may be applied to any one of the following scenarios: a relay (relay) scenario, a wireless mesh (mesh) network scenario, an IAB scenario, an ad hoc network scenario, and the like. For example, the following describes the IAB scenario.

With the development of technologies such as a VR technology, an AR technology, and an internet of things technology, there will be an increasing quantity of terminals in a future network, and usage of network data will increase continuously. To adapt to the increasing quantity of terminals and the rapidly increasing usage of network data of the market, a higher requirement is imposed on a capacity of a 5G network. In a hotspot area, to meet an ultra-high capacity requirement for 5G, it is increasingly popular to use a high-frequency small cell for networking. High-frequency carriers have poor propagation characteristics, are attenuated to a great extent when being blocked, and have a small coverage. Therefore, a large quantity of small cells need to be densely deployed in the hotspot area. These small cells may be IAB nodes.

To design a flexible and convenient access and backhaul solution, a wireless transmission solution is used for both an access link (access link, AL) and a backhaul link (backhaul link, BL) in the IAB scenario. In a network including an IAB node (referred to as an IAB network for short below), the IAB node may provide a wireless access service for a terminal device, and is connected to a donor node (donor node) through a wireless backhaul link, to transmit service data of a user. For example, the donor node may be a donor base station. The donor base station in the 5G network may be referred to as an IAB donor (IAB donor) or a donor next generation node base station (donor next generation node base station, DgNB) for short. The donor node may be a complete entity, or may be in a form in which a CU and a DU are separated from each other. In other words, the donor node includes a donor-CU (donor-CU) and a donor-DU (donor-DU). The donor-CU may alternatively be in a form in which a UP and a CP are separated from each other, that is, the donor-CU includes a CU-UP and a CU-CP. The IAB node is connected to a core network via the donor node through a wired link. For example, in a standalone 5G architecture, the IAB node is connected to a 5G core network (5G core, 5GC) via the donor node through the wired link. In a non-standalone 5G architecture, the IAB node is connected to an evolved packet core network (evolved packet core, EPC) via an eNB on the control plane, and is connected to the EPC via the donor node and the eNB on the user plane.

To ensure reliability of service transmission, the IAB network supports a multi-hop IAB node and multi-connectivity IAB node networking. Therefore, there may be a plurality of transmission paths between donor nodes. For a path, there is a determined hierarchical relationship between IAB nodes, and between the IAB node and a donor node served by the IAB node. Each IAB node considers, as a parent node, a node providing a backhaul service for the IAB node. Correspondingly, each IAB node may be considered as a child node of the parent node of the IAB node, or a downstream (lower-level) node that is far away from the donor node of the IAB node and that is adjacent to the IAB node is referred to as a child node of the IAB node.

FIG. 2 is a diagram of an IAB network topology applicable to an embodiment of this application. A parent node of an IAB node 1 is a donor node, the IAB node 1 is a parent node of an IAB node 2 and an IAB node 3, both the IAB node 2 and the IAB node 3 are parent nodes of an IAB node 4, and a parent node of an IAB node 5 is the IAB node 2. In a network architecture shown in FIG. 2, an uplink data packet of a terminal may be transmitted to the donor node via one or more IAB nodes, and then sent by the donor node to a mobile gateway device (for example, a user plane function (user plane function, UPF) network element in a 5G network). After being received from the mobile gateway device by the donor node, a downlink data packet is sent to the terminal via one or more IAB nodes. For example, the IAB node may be customer premises equipment (customer premises equipment, CPE) or a residential gateway (residential gateway, RG). For example, the terminal device and the network device in embodiments of this application may correspond to a node and a parent node of the node in FIG. 2. For example, the terminal device and the network device in embodiments of this application may be a terminal 1 and the IAB node 4 (that is, a parent node of the terminal 1). For another example, the terminal device and the network device in embodiments of this application may be the IAB node 3 and the IAB node 1 (that is, a parent node of the IAB node 3).

For ease of understanding of the technical solutions in this application, related concepts in embodiments of this application are briefly described.

1. Radio frame (frame): A plurality of radio frames may be obtained through division in time domain, and a length of each radio frame is 10 ms. For example, the radio frame in this application may also be referred to as a system frame, a radio system frame, or a frame.

2. Subframe (subframe): A radio frame is divided into 10 subframes numbered #0 to #9, and a length of each subframe 1 ms.

In an LTE system, there is only one type of subcarrier spacing, that is, 15 kHz. Therefore, each subframe has two slots (slots), and each slot is 0.5 ms. However, in an NR system, a slot length depends on a subcarrier spacing, and there are a plurality of optional subcarrier spacings, for example, 15 kHz, 30 kHz, 60 kHz, 120 kHz and 240 kHz. A wider subcarrier spacing indicates shorter duration of a slot. For example, for the subcarrier spacing of 30 kHz, each subframe has two slots, and each slot is 0.5 ms, each radio frame includes 20 slots numbered #0 to #19.

3. System frame number (system frame number, SFN): indicates a number of each radio frame.

4. Time domain resource: In embodiments of this application, data or information may be carried on a time domain resource. A time-frequency resource may include one or more time domain units (which may also be referred to as a time unit, a unit of time, or the like).

In time domain, a smallest granularity is an orthogonal frequency division multiplexing (orthogonal frequency division multiplexing, OFDM) symbol. One time domain unit (also referred to as a time unit) may be one symbol, several OFDM symbols, one slot (slot), one mini-slot (mini-slot), or one subframe (subframe). One slot may include seven or 14 symbols. One mini-slot may include at least one symbol (for example, two symbols, seven symbols, 14 symbols, or any quantity of symbols less than or equal to 14 symbols). Duration of one subframe in time domain may be 1 millisecond (ms).

In an existing cellular mobile communication system, for various different purposes, a terminal device needs to initiate random access (random access) in various scenarios. Data interworking can be normally performed between the network device and the terminal device only after the random access is completed.

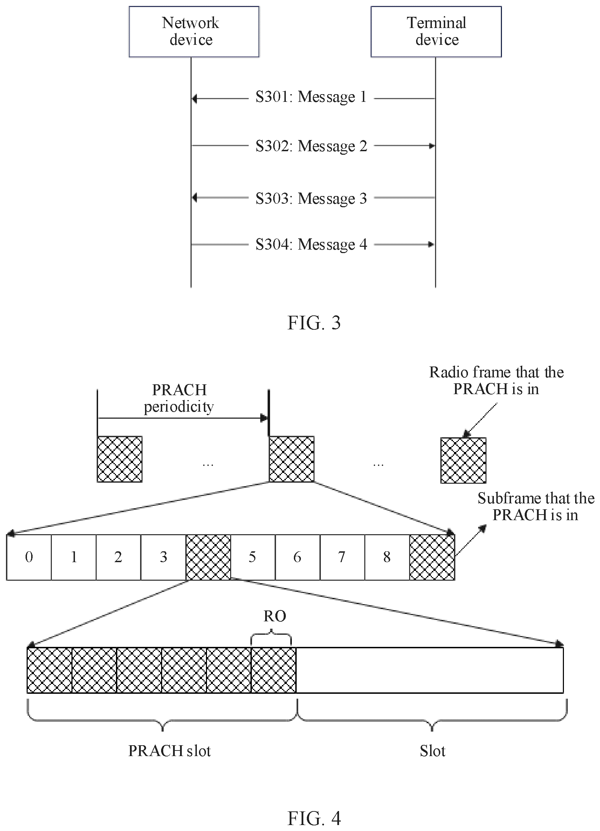

FIG. 3 is a schematic flowchart of one contention-based random access attempt. The following describes in detail the steps included in the procedure.

S301: A terminal device sends a message 1 (Msg1) to a network device. Correspondingly, the network device receives the Msg1.

Before sending the message 1, in an existing LTE or NR system, the network device configures, in an uplink slot, a physical random access channel (PRACH) resource set for the terminal device in a cell. The PRACH resource set includes a plurality of PRACH resource subsets with a specific periodicity. The periodicity may be configured, and each PRACH resource subset includes a plurality of PRACH resources. In a random access process, the terminal device may send a preamble to the network device on one PRACH resource in the PRACH resource set. One PRACH resource may include one random access occasion (random access occasion, RO).

The terminal device selects, based on a system message received from the network device and a determined synchronization signal block (synchronization signal and PBCH block, SSB or SS/PBCH) index and in the configured PRACH resource set, one of one or more ROs associated with the SSB index, to send a preamble. After determining an RO, the terminal device sends the preamble on the determined RO. It may be understood that the preamble may also be referred to as the message 1 (Msg1).

In a technology, the network device may configure, in the uplink slot, a PRACH resource for the terminal device by using RACH-ConfigGeneric (random access channel-general configuration) information element, and the terminal device may perform random access by using an RO in the PRACH resource in the uplink slot. Specifically, the terminal device may look up Table 6.3.3.2-2 based on a parameter prach-ConfigurationIndex (physical random channel-configuration index) in a higher layer information element RACH-ConfigGeneric sent by the network device, to obtain time domain location information, such as a periodicity, a frame number, a subframe number, a slot number, and a quantity of ROs in a slot, that is of PRACH resource distribution in time domain. For example, as shown in FIG. 4, three squares filled with oblique boxes at a top layer are frames that a PRACH is in, and a time domain distance between two adjacent squares filled with oblique boxes is a periodicity of the PRACH resource. A middle layer is a subframe structure of the frame that the PRACH resource is in, where each square filled with oblique boxes is a subframe that the PRACH resource is in. A bottom layer is a slot structure of the subframe that the PRACH resource is in, where a previous rectangle filled with slashes is a slot that the PRACH resource is in, the slot including the PRACH resource may be referred to as a PRACH slot, the PRACH slot includes six small squares filled with slashes, and each small square is one RO, that is, the PRACH slot includes six ROs. The following describes Table 6.3.3.2-2.

Table 1 shows information obtained by looking up Table 6.3.3.2-2 when prach-ConfigurationIndex is 103. The following provides descriptions with reference to parameters in Table 1.

Table 1

| Physical random channel-configuration index | Preamble format | $n_{SFN}$ mod $x = y$ | | Subframe number | Start symbol $l_0$ | Number of a PRACH slot in a subframe | $N_s^{RA,slot}$ Quantity of ROs in a PRACH slot in time domain | PRACH duration $N_{dur}^{RA}$ |
|---|---|---|---|---|---|---|---|---|
| | | x | y | | | | | |
| 103 | A1 | 1 | 0 | 2, 7 | 0 | 2 | 6 | 2 |

(1) prach-ConfigurationIndex is configured in a RACH-ConfigGeneric message, and a value range of the parameter is from 0 to 255. For example, Table 1 is a corresponding table when the parameter is 103.

(2) Preamble format (Preamble format). For example, the parameter in Table 1 is A1, that is, it indicates that the preamble format is Format A1.

(3) $n_{SFN}$ mod $x = y$ indicates a number of a radio frame that the PRACH resource is in (that is, indicates a periodicity of PRACH resource distribution in time domain and a radio frame that the PRACH resource is in). x is equivalent to a value of a periodicity of the PRACH resource, and y represents the radio frame that the PRACH resource is in. For example, in Table 1, $n_{SFN}$ mod 1 = 0, indicating that the network device configures a PRACH resource for the terminal device in each radio frame.

(4) The subframe number (Subframe number) indicates a number of a subframe that the PRACH resource is in. For example, the parameter in Table 1 is {2, 7}, indicating that the network device configures a PRACH resource for the terminal device in a subframe 2 and a subframe 7 in each radio frame.

(5) A start symbol (Start symbol) $l_0$ indicates a location of a start symbol of a 1st RO in a subframe that the PRACH resource is in. For example, in Table 1, the parameter is $l_0$=0, indicating a location of a start symbol of a first RO included in the subframe 2 and the subframe 7 in each radio frame.

(6) The number of a PRACH slot in a subframe (Number of PRACH slots within a subframe) $n_{slot}^{RA}$ indicates a number of a slot that the PRACH resource is in. For example, in Table 1, the parameter is 2, indicating that $n_{slot}^{RA}=\{0, 1\}$.

(7) The quantity of ROs in one PRACH slot in time domain (quantity of time-domain RACH occasions within a PRACH slot) $N_s^{RA,slot}$ indicates a quantity of ROs included in one PRACH slot. For example, in Table 1, $N_s^{RA,slot}=6$, indicating that one PRACH slot includes six RO, $n_t^{RA}=\{0, 1, 2, 3, 4, 5\}$, and $n_t^{RA}$ represents numbers of the six ROs.

(8) The PRACH duration (PRACH duration) $N_{dur}^{RA}$ indicates a quantity of OFDM symbols occupied by one RO in time domain. For example, in Table 1, $N_{dur}^{RA}=2$, indicating that one RO occupies two OFDM symbols in time domain.

In this case, based on Table 1, a location of a start symbol of an RO configured by the network device for the terminal device in one subframe is: $l = l_0 + n_t^{RA} N_{dur}^{RA} + 14 n_{slot}^{RA}$.

Specifically, in this example, when $n_{slot}^{RA} = 0$, l={0, 2, 4, 6, 8, 10}, and when $n_{slot}^{RA} = 1$, l={14, 16, 18, 20, 22, 24}. In other words, in the subframe 2 and the subframe 7, each PRACH slot includes six ROs.

S302: The network device sends a message 2 (Msg2) to the terminal device. Correspondingly, the terminal device receives the Msg2.

After receiving the preamble, the network device allocates, to the terminal, a time-frequency domain resource for sending the Msg2, scheduling information of a Msg3, and the like. The Msg2 is also referred to as RAR information. The RAR includes the scheduling information of the Msg3, that is, RAR uplink (uplink, UL) grant (grant) information.

It should be understood that, after sending the preamble, the terminal device monitors, in a configured RAR window, a PDCCH for an RAR that responds to the preamble. Currently, a location of the RAR window is determined in the following manner. In an LTE standard, a start location of the RAR window is a start location of a 3rd subframe after a corresponding subframe when sending of the preamble is completed. In an NR standard, a start location of the RAR window is a 1st PDCCH occasion (occasion) after the preamble is sent. In addition, a magnitude of the configured RAR window is N milliseconds (ms), 2≤N≤10, and N is an integer.

It should be understood that the corresponding subframe when sending of the preamble is completed is a subframe corresponding to an end location of an RO on which the preamble is sent.

S303: The terminal device sends the message 3 (Msg3) to the network device. Correspondingly, the network device receives the Msg3.

The Msg3 is sent on the time-frequency resource specified by the Msg2 and is carried on a physical uplink shared channel (physical uplink shared channel, PUSCH).

S304: The network device sends a message 4 (Msg4) to the terminal device. Correspondingly, the terminal device receives the Msg4.

The Msg4 is mainly used for conflict resolution. When a plurality of terminal devices send a same preamble by using a same RO to perform random access, the network device needs to determine a specific terminal device to be selected for random access of this time. In other words, after a random access process ends, only one terminal device can successfully perform access.

In some possible scenarios, to avoid interference, a plurality of network devices need to perform time division multiplexing on an air interface resource. In this case, some time domain resources may be unavailable for each network device. Consequently, a target network device may fail to send, in an RAR window defined in a protocol, a PDCCH for an RAR to a target terminal device, causing a failure in random access.

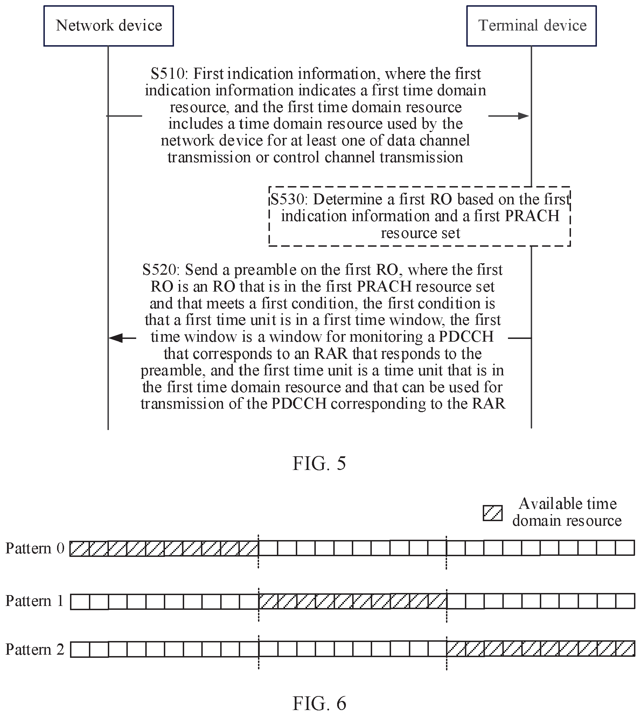

In view of this, this application provides a communication method, to effectively resolve the foregoing technical problem. The following describes in detail the method provided in this application with reference to FIG. 5.

FIG. 5 is a schematic flowchart of a communication method 500 according to this application. The method 500 includes the following steps.

S510: A network device sends first indication information to a terminal device, where the first indication information indicates a first time domain resource, and the first time domain resource includes a time domain resource used by the network device for at least one of data channel transmission or control channel transmission. Correspondingly, the terminal device receives the first indication information from the network device.

For example, the first time domain resource is a resource that is periodically repeated in time domain, the first indication information indicates a pattern (pattern) of the first time domain resource, and the pattern of the first time domain resource indicates a time domain resource used by the network device for at least one of data channel transmission or control channel transmission in a periodicity corresponding to the first time domain resource.

For example, patterns of a plurality of time domain resources are configured on a network device side, any two of the patterns of the plurality of time domain resources indicate different time domain resource distributions, and the pattern of the first time domain resource is a pattern that is of a time domain resource and that is determined by the network device from the patterns of the plurality of time domain resources based on a status of a currently available time domain resource. For example, as shown in FIG. 6, the patterns of the plurality of time domain resources include a pattern 0, a pattern 1, and a pattern 2. One box in the figure represents one subframe. When the first indication information indicates the pattern 0, the pattern 0 indicates that starting from a $1^{st}$ subframe of a frame with a system frame number of 3*n, first 10 subframes in every three frames are included in the first time domain resource. When the first indication information indicates the pattern 1, the pattern 1 indicates that starting from a $1^{st}$ subframe of the frame with the system frame number of 3*n, 10 subframes in the middle of every three frames are included in the first time domain resource. When the first indication information indicates the pattern 2, the pattern 2 indicates that, starting from a $1^{st}$ subframe of the frame with the system frame number of 3*n, last 10 subframes in every three frames are included in the first time domain resource, where n is a natural number.

For example, a plurality of time domain resource pattern sets are configured on the network device side, and each pattern set includes a pattern of at least one time domain resource. For example, a $1^{st}$ pattern set includes a pattern of one time domain resource, a $2^{nd}$ pattern set includes patterns of two time domain resources, and a $3^{rd}$ pattern set includes patterns of three time domain resources. The pattern of the first time domain resource is a pattern that is of a time domain resource and that is determined by the network device from a pattern set of the plurality of time domain resource pattern sets based on a status of currently available time domain resources.

For example, the patterns or the pattern sets of the plurality of time domain resources may be predefined in a protocol, or may be configured by another network device. This is not limited in this application.

For ease of description, in this application, the first time domain resource is referred to as an available time domain resource of the network device. Optionally, the first indication information may alternatively indicate a second time domain resource, and the second time domain resource is an unavailable time domain resource of the network device. In other words, the first indication information may directly indicate the first time domain resource, or the first indication information may indicate the second time domain resource. The terminal device may determine the first time domain resource based on the second time domain resource. This is not limited in this application. For example, the second time domain resource is a resource that is periodically repeated in time domain, second indication information indicates a pattern of the second time domain resource, and the pattern of the second time domain resource indicates an unavailable time domain resource of the network device in a periodicity corresponding to the second time domain resource.

For example, the first indication information is carried in a master information block (master indication block, MIB) message, a system information block (system information block, SIB) 1 message, or a radio resource control (radio resource control, RRC) reconfiguration message.

For example, when the first indication information is carried in the MIB, the first indication information may be carried in a new information element (information element, IE) introduced in the MIB, or may be a reserved bit in the MIB, or may reuse an occupied IE in the MIB. The occupied IE may be BCCH-BCH-MessageType, subCarrierSpacingCommon, or an IE like cellBarred.

For example, when the first indication information is carried in the SIB1, the first indication information may be carried in a new IE introduced in the SIB1, or may be a new IE introduced in a sub-IE of the SIB1, or may reuse an IE, for example, ServingCellConfigCommon, in the SIB1.

For example, the first indication information may alternatively be carried in other system information, or may be carried in a newly added IE in the other system information, or reuse an IE in the other system information. When the IE is reused, a meaning of the reused IE may be extended or a current meaning of the reused IE may be updated.

S520: The terminal device sends a preamble to the network device on a first RO, where the first RO is an RO that is in a first PRACH resource set and that meets a first condition, the first PRACH resource set includes a plurality of ROs, the first condition is that a first time unit is in a first time window, the first time window is a window for monitoring a PDCCH that corresponds to an RAR that responds to the preamble, and the first time unit is a time unit that is in the first time domain resource and that can be used for transmission of the PDCCH corresponding to the RAR. Correspondingly, the network device receives the preamble on the first RO.

It may be understood that in this implementation, the terminal device may determine the first time window based on a definition of an RAR time window specified in an existing standard. For the definition of the RAR time window specified in the existing standard, refer to the descriptions in S302. Details are not described herein again.

The first condition may also be understood as that the first time window overlaps with the first time domain resource, and the overlapping time domain resource includes a time unit that can be used for transmission of the PDCCH that corresponds to the RAR for the preamble.

For example, the first PRACH resource set is a PRACH resource determined based on a configuration from the network device. For example, the first PRACH resource set may be a PRACH resource configured by the network device for the terminal device by using prach-ConfigurationIndex.

For example, the first PRACH resource set is a PRACH resource associated with a first SSB, and the first SSB is an SSB corresponding to the terminal device or an SSB configured by the network device for the terminal device.

It may be understood that the first PRACH resource set may be a PRACH resource that is associated with the first SSB and that is in the PRACH resource configured by the network device for the terminal device by using prach-ConfigurationIndex.

It may be understood that the first SSB is an SSB corresponding to the terminal device, indicating that the first SSB is any SSB in SSBs received by the terminal device and whose reference signal received power (reference signal received power, RSRP) is greater than a corresponding threshold.

For example, the first SSB is an optimal SSB corresponding to the terminal device, and the optimal SSB is an SSB that is in the SSBs received by the terminal device and whose reference signal received power or signal strength is highest.

Optionally, before S520, the method further includes:

S530: The terminal device determines the first RO based on the first indication information and the first PRACH resource set.

For example, when the terminal device has a requirement for random access, the terminal device may search, starting from a moment at which random access is required, the first PRACH resource set for an RO meeting the first condition. For example, to reduce an access delay, the terminal device may send a preamble on a 1st RO (that is, the first RO) that meets the first condition and that is after the moment at which random access is required.

In the foregoing technical solution, the terminal device may select, based on the first time domain resource, an appropriate first RO from the first PRACH resource set to initiate random access, so that the terminal device can have an opportunity to receive, in an RAR window (that is, the first time window) corresponding to the first RO, a PDCCH that is sent by the network device and that corresponds to an RAR that responds to a preamble transmitted on the first RO, thereby reducing a probability of random access failure caused by RAR window timeout.

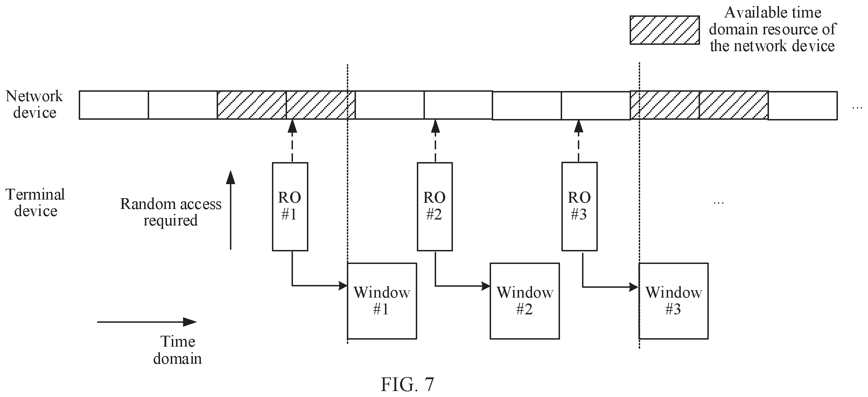

For ease of understanding the method, the following describes the method 500 by using an example with reference to FIG. 7. As shown in FIG. 7, an RO #1 to an RO #3 are ROs included in a first PRACH resource set, and a window #1, a window #2, and a window #3 are RAR windows corresponding to the RO #1, the RO #2, and the RO #3 respectively. When a terminal device has a requirement for random access, the terminal device determines whether a PDCCH that corresponds to an RAR for a preamble sent on the RO #1 can be received in the window #1 corresponding to the RO #1. As shown in FIG. 7, the window #1 partially overlaps with an available time domain resource of a network device. If the overlapping time domain resource can be used for transmission of the PDCCH that corresponds to the RAR that responds to the preamble sent on the RO #1, the terminal device may send the preamble on the RO #1 to initiate random access. If the overlapping time domain resource cannot be used for transmission of the PDCCH that corresponds to the RAR that responds to the preamble sent on the RO #1, the terminal device does not initiate random access on the RO #1. If random access cannot be initiated on the RO #1, the terminal device continues to determine whether a PDCCH that corresponds to an RAR for a preamble sent on the RO #2 can be received in the window #2 corresponding to the RO #2. It can be learned that the window #2 does not overlap with the available time domain resource of the network device. Therefore, the terminal device does not initiate random access on the RO #2. The terminal device continues to determine whether a PDCCH that corresponds to an RAR for a preamble sent on the RO #3 can be received in the window #3 corresponding to the RO #3. It can be learned that the window #3 is completely included in the available time domain resource of the network device. Therefore, the terminal device may send the preamble on the RO #3 to initiate random access.

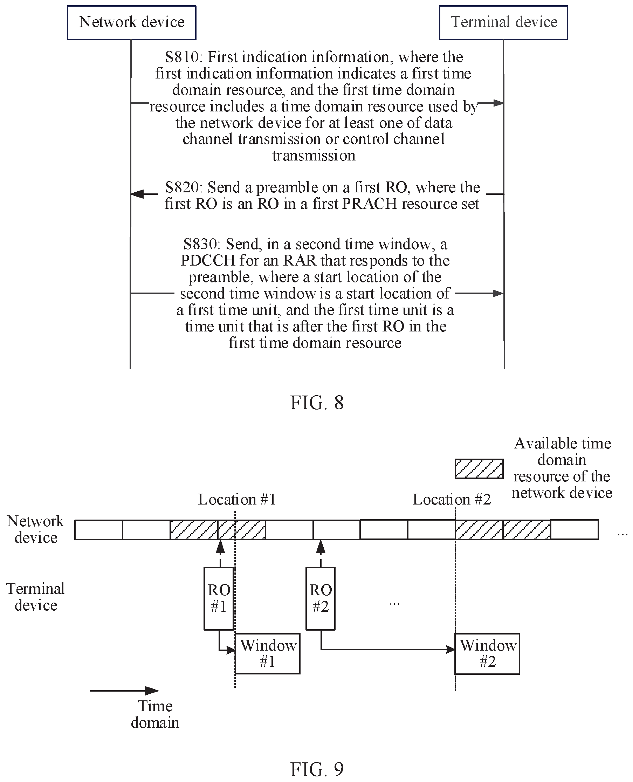

The method 500 shown in FIG. 5 may be considered as follows: Provided that the RAR time window defined in the existing standard is not changed, the terminal device determines whether an RAR window that corresponds to an RO resource that can be used by the terminal device overlaps with an available resource that is of the network device and that is indicated by the network device. If the RAR window overlaps with the available resource, the terminal device may initiate random access on the RO, to reduce a probability of random access failure. It may be understood that the method 500 shown in FIG. 5 is still applicable to a case in which a problem that the RAR time window is not in an available resource of the network device still exists even if the RAR time window is changed compared with that defined in the existing standard. This application provides another method below with reference to FIG. 8. A main difference between the method and the method 500 lies in that in the method, an RAR time window corresponding to an RO is redefined, to reduce a probability of random access failure. The following describes the method in detail.

FIG. 8 is a schematic flowchart of another communication method 800 according to this application. The method 800 includes the following steps.

S810: A network device sends first indication information to a terminal device, where the first indication information indicates a first time domain resource, and the first time domain resource includes a time domain resource used by the network device for at least one of data channel transmission or control channel transmission. Correspondingly, the terminal device receives the first indication information from the network device.

For S810, refer to the specific descriptions in S510. Details are not described herein again.

S820: The terminal device sends a preamble to the network device on a first RO, where the first RO is an RO in a first PRACH resource set, and the first PRACH resource set includes a plurality of ROs. Correspondingly, the network device receives the preamble from the terminal device on the first RO.

For descriptions of the first PRACH resource set, refer to the descriptions in S520. Details are not described herein again.

It should be noted that the first RO is any RO that is in the first PRACH resource set and that can be used by the terminal device to initiate random access.

S830: The network device sends, to the terminal device in a second time window, a PDCCH for an RAR that responds to the preamble, where a start location of the second time window is a start location of a first time unit, and the first time unit is a time unit that is after the first RO in the first time domain resource. Correspondingly, the terminal device monitors, in the second time window, the PDCCH for the RAR that responds to the preamble.

For example, a length of the second time window is a length of an RAR window configured by the network device.

For example, the first time unit is a 1st time unit that is after the first RO in the first time domain resource.

For example, the first time unit is a 1st time unit that is after the first RO in the first time domain resource and that can be used for transmission of the PDCCH for the RAR for the preamble.

For example, the first time unit is a start location of a 1st time unit of a 1st first time domain resource periodicity that is after the first RO in the first time domain resource.

It may be understood that, in this embodiment, a start location that is of an RAR window and that is specified in an existing standard is modified, and a start location of a newly defined RAR window is a start location of the time unit that is after the first RO in the first time domain resource, so that the terminal device has an opportunity to receive, in the newly defined RAR window (that is, the second time window), a PDCCH that is sent by the network device and that is for an RAR that responds to a preamble sent on the first RO, thereby reducing a failure in random access of the terminal device.

For ease of understanding this embodiment, the following describes the method 800 by using an example with reference to FIG. 9. As shown in FIG. 9, an RO #1 and an RO #2 are ROs included in a first PRACH resource set. The following uses an example to describe, based on the possible start location that is of the RAR window and that is provided in the method 800, RAR windows that correspond to the RO #1 and the RO #2 and that are determined according to the method 800.

For example, a location of the RO #1 is shown in FIG. 9. According to the method 800, a start location of an RAR window corresponding to an RO is defined as a start location of a first time unit, and the first time unit is a start location of a 1st time unit that is after the RO in an available time domain resource (that is, a first time domain resource) of a network device and that can be used for transmission of a PDCCH for an RAR that responds to a preamble sent on the RO. In this case, as shown in FIG. 9, if a location #1 is a start location of a 1st time unit that is after the RO #1 in the available time domain resource of the network device and that can be used for transmission of a PDCCH for an RAR that responds to a preamble sent on the RO #1, an RAR window corresponding to the RO #1 is a window #1, a start location of the window #1 is the location #1, and a length of the window #1 is a length of an RAR window configured by the network device.

For another example, a location of the RO #2 is shown in FIG. 9. According to the method 800, a start location of an RAR window corresponding to an RO is defined as a start location of a 1st time unit that is after the RO in an available time domain resource of a network device. In this case, as shown in FIG. 9, if a location #2 is a start location of a 1st time unit that is after the RO #2 in the available time domain resource of the network device, an RAR window corresponding to the RO #2 is a window #2, a start location of the window #2 is the location #2, and a length of the window #2 is a length of an RAR window configured by the network device.

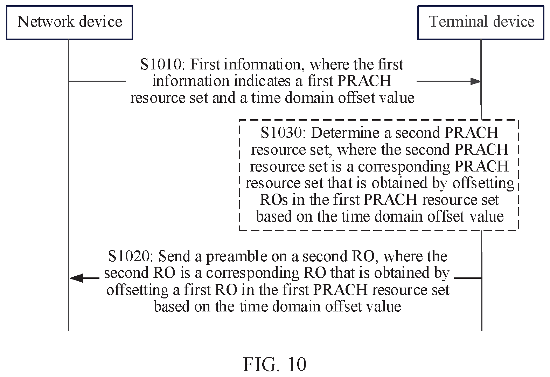

It may be understood that the RO used by the terminal device to perform random access in the methods shown in FIG. 5 and FIG. 8 may be considered as an RO configured by the network device for the terminal device based on a PRACH configuration in a current protocol. This application provides another method below with reference to FIG. 10. A main difference between the method and the method 500 and the method 800 lies in that, in the method, a network device adds a time offset configuration to the PRACH configuration in the current protocol, to indicate, to a terminal device, a PRACH resource that can be used to initiate random access, so as to reduce a probability of random access failure. It may be understood that a method 1000 shown in FIG. 10 is still applicable to a case in which a problem that an RAR time window defined based on a protocol is not in an available resource of the network device still exists even if a PRACH configuration changes compared with that in the current protocol. The following describes the method in detail.

FIG. 10 is a schematic flowchart of still another communication method 1000 according to this application. The method 1000 includes the following steps.

S1010: The network device sends first information to the terminal device, where the first information indicates a first PRACH resource set and a time domain offset value. Correspondingly, the terminal device receives the first information from the network device.

The first PRACH resource set includes a plurality of ROs, a corresponding second RO that is obtained by offsetting a first RO in the first PRACH resource set based on the time domain offset value meets a first condition, the first RO is any RO in the first PRACH resource set, the first condition is that a first time unit is in a first time window, the first time window is a window in which the terminal device monitors a PDCCH that corresponds to an RAR that responds to a preamble sent on the second RO, the first time unit is a time unit that is in a first time domain resource and that can be used for transmission of the PDCCH that corresponds to the RAR for the preamble, and the first time domain resource includes a time domain resource used by the network device for at least one of data channel transmission or control channel transmission.

The first condition may also be understood as that the first time window overlaps with the first time domain resource, and the overlapping time domain resource includes a time unit that can be used for transmission of the PDCCH that corresponds to the RAR for the preamble.

For example, the first PRACH resource set is a part of a PRACH resource determined based on a configuration from the network device. For example, the first PRACH resource set may be a part of a PRACH resource configured by the network device for the terminal device by using prach-ConfigurationIndex.

For example, the first PRACH resource set is a part or all of a PRACH resource associated with a first SSB, and the first SSB is an SSB configured by the network device for the terminal device.

For example, the time domain offset value includes a frame offset value $\Delta y$, where the frame offset value indicates to offset the ROs in the first PRACH resource set by $\Delta y$ system frames, and $\Delta y$ is an integer. For example, if a frame number of a system frame that the first RO in the first PRACH resource set is in is y, a frame number of a system frame that a corresponding RO that is obtained by offsetting the first RO based on the frame offset value $\Delta y$ is in is (y+$\Delta y$).

For example, the time domain offset value includes a subframe offset value $\Delta s$, where the subframe offset value indicates to offset the ROs in the first PRACH resource set by $\Delta s$ subframes, and $\Delta s$ is an integer. For example, if a subframe number of a subframe that the first RO in the first PRACH resource set is in is s, a subframe number of a subframe that a corresponding RO that is obtained by offsetting the first RO based on the subframe offset value $\Delta s$ is in is (s+$\Delta s$).

For example, the time domain offset value includes a frame offset value $\Delta y$ and a subframe offset value $\Delta s$, where the frame offset value indicates to offset the ROs in the first PRACH resource set by $\Delta y$ system frames, the subframe offset value indicates to offset the ROs in the first PRACH resource set by $(s_n + \Delta s)$ mod 10 subframes, $s_n$ indicates subframes that the ROs in the first PRACH resource set are in, $\Delta y$ is an integer, and $\Delta s$ is an integer. For example, if for a system frame that the first RO in the first PRACH resource set is in, a frame number is y and a subframe number is s, for a system frame that an RO that is obtained by offsetting the first RO based on the frame offset value $\Delta y$ and the subframe offset value $\Delta s$ is in, a frame number is (y+$\Delta y$) and a subframe number is (s+$\Delta s$) mod 10. It may be understood that one system frame includes 10 subframes. Therefore, when (s+$\Delta s$) is greater than 10, it indicates that the first RO needs to perform system frame offset in time domain. Therefore, for (s+$\Delta s$) mod 10, the first RO may perform subframe offset only in one system frame.

S1020: The terminal device sends a preamble to the network device on the second RO, where the second RO is a corresponding RO that is obtained by offsetting the first RO in the first PRACH resource set based on the time domain offset value. Correspondingly, the network device receives the preamble from the terminal device on the second RO.

Optionally, before S1020, the method further includes:

S1030: The terminal device determines a second PRACH resource set, where the second RO is an RO in the second PRACH resource set, and the second PRACH resource set is a corresponding PRACH resource set that is obtained by offsetting the ROs in the first PRACH resource set based on the time domain offset value.

It should be noted that, because the second PRACH resource set does not include a PRACH resource configured by the network device for the terminal device based on a current protocol, before the network device receives the preamble from the terminal device on the second RO, the network device also needs to determine the second PRACH resource set, to monitor, in the second PRACH resource set, the preamble sent by the terminal device.

In the foregoing technical solution, the network device adds a time domain offset configuration based on a configuration of the first PRACH resource set and based on a location of an available resource of the network device, to indicate the terminal device to initiate random access on a corresponding RO that is obtained by offsetting the ROs in the first PRACH resource set. When the terminal device sends the preamble on the second RO that is obtained based on a time domain offset, the terminal device can have an opportunity to receive, in an RAR window (that is, a second time window) corresponding to the second RO, a PDCCH that is sent by the network device and that corresponds to an RAR that responds to the preamble transmitted on the second RO, thereby avoiding a random access failure caused due to RAR window timeout.

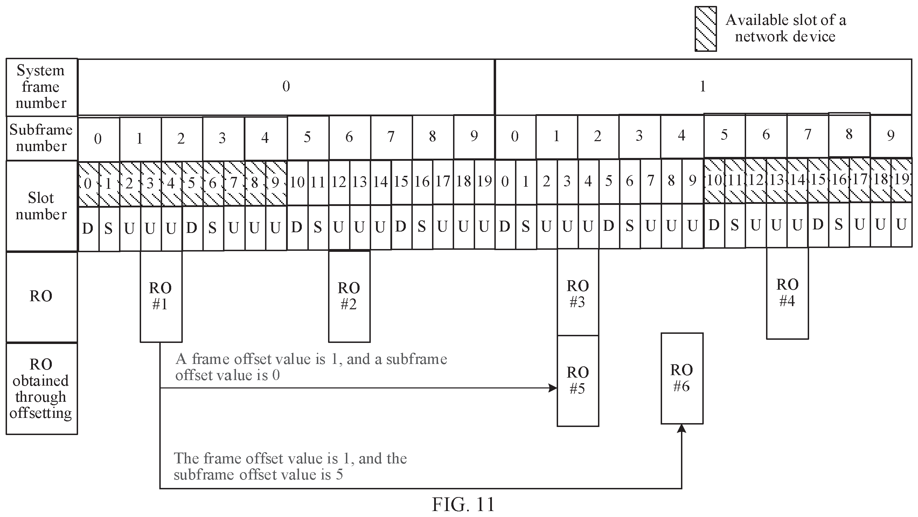

For ease of understanding this embodiment, the following describes the method 1000 by using an example with reference to FIG. 11. FIG. 11 is described by using an example in which a subcarrier spacing in an NR system is 30 kHz. In this case, one system frame includes 20 slots, and a TDD uplink-downlink slot is configured as a DSUUU, where D represents a downlink slot, U represents an uplink slot, S represents a special slot, and S includes a flexible symbol. FIG. 11 merely shows an example of a subframe, a slot, and locations of ROs (that is, an RO #1 to an RO #4) configured based on a protocol that are included in a system frame 0 and a system frame 1. For example, if the first PRACH resource set includes the RO #1, and the time domain offset value includes a frame offset value $\Delta y$=1, because the RO #1 occupies a slot 3 and a slot 4 in the system frame 0, a corresponding RO that is obtained by offsetting the RO #1 based on the frame offset value occupies the slot 3 and the slot 4 in the system frame 1, that is, the corresponding RO that is obtained by offsetting the RO #1 based on the frame offset value is an RO #5 in the figure. For example, if the first PRACH resource set includes the RO #1, and the time domain offset value includes a frame offset value $\Delta y$=1 and a subframe offset value $\Delta s$=5, because the RO #1 occupies a slot 3 and a slot 4 in the system frame 0, a corresponding RO that is obtained by offsetting the RO #1 based on the frame offset value and the subframe offset value occupies a slot 8 and a slot 9 in the system frame 1, that is, the corresponding RO that is obtained by offsetting the RO #1 based on the frame offset value and the subframe offset value is an RO #6 in the figure.

It may be understood that the information names used in some of the foregoing embodiments are merely examples and constitute no limitation on the protection scope of embodiments of this application.

It may be further understood that the formulas used in embodiments of this application are merely examples for description and constitute no limitation on the protection scope of embodiments of this application. In a process of calculating the foregoing related parameters, calculation may be performed based on the foregoing formulas, or calculation may be performed based on variations of the foregoing formulas, or calculation may be performed in another manner, to meet calculation results of the formulas.

It may be further understood that some optional features in embodiments of this application may be independent of other features in some scenarios, or may be combined with other features in some scenarios. This is not limited.

It may be further understood that sequence numbers of the foregoing processes do not mean an execution sequence. The execution sequence of the processes should be determined based on functions and internal logic of the processes, and should not constitute any limitation on implementation processes of embodiments of this application.

It may also be understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and operations implemented by a device (for example, the terminal device or the network device) may also be implemented by a component (for example, a chip or a circuit) of the device.

The foregoing describes in detail the method provided in embodiments of this application with reference to FIG. 1 to FIG. 11. The foregoing method is mainly described from a perspective of interaction between the terminal device and the network device. It may be understood that, to implement the foregoing functions, the terminal device and the network device include corresponding hardware structures and/or software modules for performing the functions.

A person skilled in the art may be aware that, with reference to the units and algorithm steps in the examples described with reference to embodiments disclosed in this specification, this application can be implemented by hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

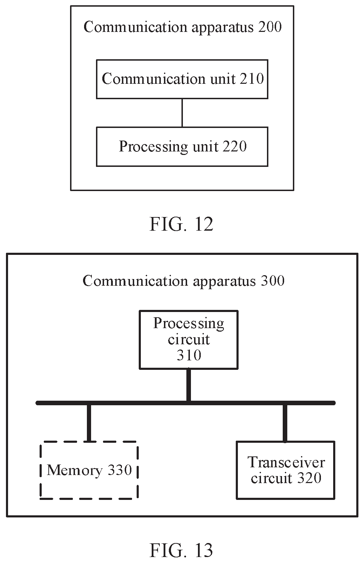

The following describes in detail communication apparatuses provided in embodiments of this application with reference to FIG. 12 and FIG. 13. It should be understood that descriptions of apparatus embodiments correspond to the descriptions of the method embodiments. Therefore, for content that is not described in detail, refer to the foregoing method embodiments. For brevity, details of some content are not described herein again. In embodiments of this application, the terminal device or the network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in actual implementation. An example in which each functional module is obtained through division based on each corresponding function is used below for description.

The foregoing describes in detail the communication method provided in this application. The following describes the communication apparatus provided in this application. In a possible implementation, the apparatus is configured to implement the steps or procedures corresponding to the network device in the foregoing method embodiments. In another possible implementation, the apparatus is configured to implement the steps or procedures corresponding to the terminal device in the foregoing method embodiments.

FIG. 12 is a block diagram of a communication apparatus 200 according to an embodiment of this application. As shown in FIG. 12, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement the corresponding steps or procedures performed by the terminal device in the foregoing method embodiments. The processing unit 220 is configured to perform the processing-related operations of the terminal device in the foregoing method embodiments, and the communication unit 210 is configured to perform sending-related operations of the terminal device in the foregoing method embodiments.

In another possible design, the apparatus 200 may implement the corresponding steps or procedures performed by the network device in the foregoing method embodiments. The communication unit 210 is configured to perform the receiving-related operations of the network device in the foregoing method embodiments, and the processing unit 220 is configured to perform the processing-related operations of the network device in the foregoing method embodiments.

It should be understood that, the apparatus 200 herein is implemented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another suitable component that supports the described functions. In an optional example, a person skilled in the art may understand that, the apparatus 200 may be specifically the terminal device in the foregoing embodiments, and may be configured to perform the procedures and/or steps corresponding to the terminal device in the foregoing method embodiments; or the apparatus 200 may be specifically the network device in the foregoing embodiments, and may be configured to perform the procedures and/or steps corresponding to the network device in the foregoing method embodiments. To avoid repetition, details are not described herein again.

The apparatus 200 in each of the foregoing solutions has a function of implementing the corresponding steps performed by the terminal device in the foregoing method, or the apparatus 200 in each of the foregoing solutions has a function of implementing the corresponding steps performed by the network device in the foregoing method. The function may be implemented by hardware, or may be implemented by hardware executing corresponding software. The hardware or the software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit like the processing unit may be replaced with a processor, to separately perform the sending and receiving operations and the processing-related operations in the method embodiments.

In addition, the communication unit may alternatively be a transceiver circuit (for example, may include a receiving circuit and a sending circuit), and the processing unit may be a processing circuit. In this embodiment of this application, the apparatus in FIG. 12 may be the terminal device or the network device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 13 is a block diagram of a communication apparatus 300 according to an embodiment of this application. The apparatus 300 includes a processing circuit 310 and a transceiver circuit 320. The processing circuit 310 and the transceiver circuit 320 communicate with each other through an internal connection path, and the processing circuit 310 is configured to execute instructions, to control the transceiver circuit 320 to send a signal and/or receive a signal. The transceiver circuit 320 may also be referred to as a transceiver interface.

Optionally, the apparatus 300 may further include a memory 330. The memory 330, the processing circuit 310, and the transceiver circuit 320 communicate with each other through an internal connection path. The memory 330 is configured to store instructions, and the processing circuit 310 may execute the instructions stored in the memory 330. In a possible implementation, the apparatus 300 is configured to implement the procedures and steps corresponding to the terminal device in the foregoing method embodiments. In another possible implementation, the apparatus 300 is configured to implement the procedures and steps corresponding to the network device in the foregoing method embodiments.

It should be understood that, the apparatus 300 may be specifically the terminal device or the network device in the foregoing embodiments, or may be a chip or a chip system. Correspondingly, the transceiver circuit 320 may be a transceiver interface of the chip. This is not limited herein. Specifically, the apparatus 300 may be configured to perform the steps and/or procedures corresponding to the terminal device or the network device in the foregoing method embodiments. Optionally, the memory 330 may include a read-only memory and a random access memory, and provide instructions and data for the processor. A part of the memory may further include a non-volatile random access memory. For example, the memory may further store information about a device type. The processing circuit 310 may be configured to execute the instructions stored in the memory, and when the processing circuit 310 executes the instructions stored in the memory, the processing circuit 310 is configured to perform the steps and/or procedures corresponding to the terminal device or the network device in the foregoing method embodiments.

In an implementation process, steps of the foregoing method can be completed by using a hardware integrated logical circuit in the processor, or by using instructions in a form of software. The steps of the method disclosed with reference to embodiments of this application may be directly performed and completed by using a hardware processor, or may be performed and completed by using a combination of a hardware module and a software module in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that the processing circuit in this embodiment of this application may be a processing circuit in an integrated circuit chip, and has a signal processing capability. In an implementation process, steps in the foregoing method embodiments can be completed by using a hardware integrated logical circuit in the processing circuit or by using instructions in a form of software. The foregoing processing circuit may be the following device or may be included in the following device: a general-purpose processor, digital signal processing (digital signal processing, DSP), an ASIC, a field programmable gate array (field programmable gate array, FPGA) or another programmable logic device, a discrete gate, a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed and completed by using a hardware decoding processor, or may be performed and completed by using a combination of a hardware module and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processing circuit reads information in the memory and completes the steps of the foregoing method in combination with hardware of the processing circuit.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memories of the systems and methods described in this specification include but are not limited to these memories and any memory of another appropriate type.

It should be noted that when the processing circuit is a processor or is included in the processor, and the processor is a general-purpose processor, a DSP, an ASIC, an FPGA or another programmable logic device, a discrete gate, a transistor logic device, or a discrete hardware component. The memory (storage module) may be integrated into the processor.

In addition, this application further provides a computer-readable storage medium. The computer-readable storage medium stores computer instructions, and when the computer instructions are run on a computer, the operations and/or procedures performed by the terminal device or the network device in the method embodiments of this application are performed.

This application further provides a computer program product. The computer program product includes computer program code or instructions. When the computer program code or the instructions are run on a computer, the operations and/or procedures performed by the terminal device or the network device in the method embodiments of this application are performed.

In addition, this application further provides a chip. The chip includes a processing circuit. A memory configured to store a computer program is disposed independent of the chip or disposed inside the chip. The processing circuit is configured to execute the computer program stored in the memory, so that the operations and/or processing performed by the terminal device or the network device in any one of the method embodiments are performed.

Further, the chip may include a communication interface. The communication interface may be an input/output interface, an interface circuit, or the like. Further, the chip may include the memory.

In addition, this application further provides a communication system. The communication system includes the terminal device and the network device in embodiments of this application.

It should be further noted that, the memories described in this specification is intended to include, but not limited to, these memories and any memory of another appropriate type.

A person of ordinary skill in the art may be aware that, the units and algorithm steps in the examples described with reference to embodiments disclosed in this specification can be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in another manner. For example, the foregoing apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form. The units described as separate parts may or may not be physically separate, and parts displayed as units may or may not be physical units, that is, may be at one location, or may be distributed on a plurality of network units. Some or all of the units may be selected based on actual requirements to achieve the objectives of the solutions of the embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more. "At least one item (piece)" or a similar expression thereof means one item (piece) or a plurality of items (pieces), that is, any combination of these items includes a single item (piece) or any combination of a plurality of items (pieces). For example, at least one of a, b, or c indicates a, b, c, a and b, a and c, b and c, or a, b, and c.

It should be further understood that, the term "and/or" in this specification describes only an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

**Claims**

1.  A communication method, comprising:

    receiving first indication information from a network device, wherein the first indication information indicates a first time domain resource, and the first time domain resource comprises a time domain resource used by the network device for at least one of data channel transmission or control channel transmission; and
    sending a preamble to the network device on a first random access occasion RO, wherein the first RO is an RO that is in a first physical random access channel PRACH resource set and that meets a first condition, the first PRACH resource set comprises a plurality of ROs, the first condition is that a first time unit is in a first time window, the first time window is a window for monitoring a physical downlink control channel PDCCH that corresponds to a random access response RAR that responds to the preamble, and the first time unit is a time unit that is in the first time domain resource and that can be used for transmission of the PDCCH corresponding to the RAR.

2.  The method according to claim 1, wherein the method further comprises:
    determining the first RO based on the first indication information and the first PRACH resource set.

3.  The method according to claim 1 or 2, wherein the first time domain resource is a resource that is periodically repeated in time domain, the first indication information indicates a pattern of the first time domain resource, and the pattern of the first time domain resource indicates a time domain resource used by the network device for at least one of data channel transmission or control channel transmission in a periodicity corresponding to the first time domain resource.

4.  The method according to any one of claims 1 to 3, wherein the first indication information is carried in a master information block MIB message, a system information block SIB1 message, or a radio resource control RRC reconfiguration message.

5.  The method according to any one of claims 1 to 4, wherein the first PRACH resource set is a PRACH resource associated with a first synchronization signal block SSB, and the first SSB is an SSB corresponding to a terminal device or an SSB configured by the network device for the terminal device.

6.  The method according to any one of claims 1 to 5, wherein the first PRACH resource set is a PRACH resource determined based on a configuration from the network device.

7.  A communication method, comprising:

    sending first indication information to a terminal device, wherein the first indication information indicates a first time domain resource, and the first time domain resource comprises a time domain resource used by a network device for at least one of data channel transmission or control channel transmission; and
    receiving a preamble from the terminal device on a first random access occasion RO, wherein the first RO meets a first condition, the first condition is that a first time unit is in a first time window, the first time window is a window in which the terminal device monitors a downlink control channel PDCCH that corresponds to a random access response RAR that responds to the preamble, and the first time unit is a time unit that is in the first time domain resource and that can be used for transmission of the PDCCH corresponding to the RAR.

8. The method according to claim 7, wherein the first time domain resource is a resource that is periodically repeated in time domain, the first indication information indicates a pattern of the first time domain resource, and the pattern of the first time domain resource indicates a time domain resource used by the network device for at least one of data channel transmission or control channel transmission in a periodicity corresponding to the first time domain resource.

9. The method according to claim 7 or 8, wherein the first indication information is carried in a master information block MIB message, a system information block SIB1 message, or a radio resource control RRC reconfiguration message.

10. A communication method, comprising:

receiving first indication information from a network device, wherein the first indication information indicates a first time domain resource, and the first time domain resource comprises a time domain resource used by the network device for at least one of data channel transmission or control channel transmission;
sending a preamble to the network device on a first random access occasion RO, wherein the first RO is an RO in a first physical random access channel PRACH resource set, and the first PRACH resource set comprises a plurality of ROs; and
monitoring, in a second time window, a downlink control channel PDCCH for a random access response RAR that responds to the preamble sent on the first RO, wherein a start location of the second time window is a start location of a first time unit, and the first time unit is a time unit that is after the first RO in the first time domain resource.

11. The method according to claim 10, wherein a length of the second time window is a length of a configured RAR window.

12. The method according to claim 10 or 11, wherein the first time unit is a $1^{st}$ time unit that is after the first RO in the first time domain resource.

13. The method according to claim 10 or 11, wherein the first time unit is a $1^{st}$ time unit that is after the first RO in the first time domain resource and that can be used for transmission of the PDCCH for the RAR.

14. The method according to any one of claims 10 to 13, wherein the first time domain resource is a resource that is periodically repeated in time domain, the first indication information indicates a pattern of the first time domain resource, and the pattern of the first time domain resource indicates a time domain resource used by the network device for at least one of data channel transmission or control channel transmission in a periodicity corresponding to the first time domain resource.

15. The method according to any one of claims 10 to 14, wherein the first indication information is carried in a master information block MIB message, a system information block SIB1 message, or a radio resource control RRC reconfiguration message.

16. The method according to any one of claims 10 to 15, wherein the first PRACH resource set is a PRACH resource associated with a first synchronization signal block SSB, and the first SSB is an SSB corresponding to a terminal device or an SSB configured by the network device for the terminal device.

17. The method according to any one of claims 10 to 16, wherein the first PRACH resource set is a PRACH resource determined based on a configuration from the network device.

18. A communication method, comprising:

sending first indication information to a terminal device, wherein the first indication information indicates a first time domain resource, and the first time domain resource comprises a time domain resource used by a network device for at least one of data channel transmission or a control channel transmission;
receiving a preamble from the terminal device on a first random access occasion RO; and
sending, to the terminal device in a second time window, a downlink control channel PDCCH for a random access response RAR that responds to the preamble, wherein a start location of the second time window is a start location of a first time unit, and the first time unit is a time unit that is after the first RO in the first time domain resource.

19. The method according to claim 18, wherein a length of the second time window is a length of a configured RAR window.

20. The method according to claim 18 or 19, wherein the first time unit is a 1st time unit that is after the first RO in the first time domain resource.

21. The method according to claim 18 or 19, wherein the first time unit is a 1st time unit that is after the first RO in the first time domain resource and that can be used for transmission of the PDCCH for the RAR.

22. The method according to any one of claims 18 to 21, wherein the first time domain resource is a resource that is periodically repeated in time domain, the first indication information indicates a pattern of the first time domain resource, and the pattern of the first time domain resource indicates a time domain resource used by the network device for at least one of data channel transmission or control channel transmission in a periodicity corresponding to the first time domain resource.

23. The method according to any one of claims 18 to 22, wherein the first indication information is carried in a master information block MIB message, a system information block SIB1 message, or a radio resource control RRC reconfiguration message.

24. A communication method, comprising:

receiving first information from a network device, wherein the first information indicates a first PRACH resource set and a time domain offset value, the first PRACH resource set comprises a plurality of ROs, at least one corresponding second RO that is obtained by offsetting at least one first RO in the first PRACH resource set based on the time domain offset value meets a first condition, the first condition is that a first time unit is in a first time window, the first time window is a window in which a terminal device monitors a downlink control channel PDCCH that corresponds to a random access response RAR that responds to a preamble sent on the second RO, the first time unit is a time unit that is in a first time domain resource and that can be used for transmission of the PDCCH corresponding to the RAR, and the first time domain resource comprises a time domain resource used by the network device for at least one of data channel transmission or control channel transmission; and
sending a preamble to the network device on one of the at least one second RO.

25. The method according to claim 24, wherein the method further comprises:
determining a second PRACH resource set, wherein the second RO is an RO in the second PRACH resource set, and the second PRACH resource set is a corresponding PRACH resource set that is obtained by offsetting the ROs in the first PRACH resource set based on the time domain offset value.

26. The method according to claim 24 or 25, wherein

the time domain offset value comprises a frame offset value $\Delta y$, the frame offset value indicates to offset the ROs in the first PRACH resource set by $\Delta y$ system frames, and $\Delta y$ is an integer; or
the time domain offset value comprises a subframe offset value $\Delta s$, the subframe offset value indicates to offset the ROs in the first PRACH resource set by $\Delta s$ subframes, and $\Delta s$ is an integer; or
the time domain offset value comprises a frame offset value $\Delta y$ and a subframe offset value $\Delta s$, wherein the frame offset value indicates to offset the ROs in the first PRACH resource set by $\Delta y$ system frames, the subframe offset value indicates to offset the ROs in the first PRACH resource set by $(s_n + \Delta s)$ mod 10 subframes, the $s_n$ indicates subframes that the ROs in the first PRACH resource set are in, the $\Delta y$ is an integer, and the $\Delta s$ is an integer.

27. The method according to any one of claims 24 to 26, wherein the first PRACH resource set is a part or all of a PRACH resource associated with a first synchronization signal block SSB, and the first SSB is an SSB configured by the network device for the terminal device.

28. The method according to any one of claims 24 to 27, wherein the first PRACH resource set is a part of a PRACH resource configured by the network device for the terminal device.

29. A communication method, comprising:

sending first information to a terminal device, wherein the first information indicates a first physical random access channel PRACH resource set and a time domain offset value, the first PRACH resource set comprises a plurality of random access occasions ROs, at least one corresponding second RO that is obtained by offsetting at least one first RO in the first PRACH resource set based on the time domain offset value meets a first condition, the first condition is that a first time unit is in a first time window, the first time window is a window in which the terminal device monitors a downlink control channel PDCCH that corresponds to a random access response RAR that responds to a preamble sent on the second RO, the first time unit is a time unit that is in a first time domain resource and that can be used for transmission of the PDCCH corresponding to the RAR, and the first time domain resource comprises a time domain resource used by a network device for at least one of data channel transmission or control channel transmission; and

receiving a preamble from the terminal device on one of the at least one second RO.

30. The method according to claim 29, wherein the method further comprises:
determining a second PRACH resource set, wherein the second RO is an RO in the second PRACH resource set, and the second PRACH resource set is a corresponding PRACH resource set that is obtained by offsetting the ROs in the first PRACH resource set based on the time domain offset value.

31. The method according to claim 29 or 30, wherein

the time domain offset value comprises a frame offset value $\Delta y$, the frame offset value indicates to offset the ROs in the first PRACH resource set by $\Delta y$ system frames, and $\Delta y$ is an integer; or
the time domain offset value comprises a subframe offset value $\Delta s$, the subframe offset value indicates to offset the ROs in the first PRACH resource set by $\Delta s$ subframes, and $\Delta s$ is an integer; or
the time domain offset value comprises a frame offset value $\Delta y$ and/or a subframe offset value $\Delta s$, wherein the frame offset value indicates to offset the ROs in the first PRACH resource set by $\Delta y$ system frames, the subframe offset value indicates to offset the ROs in the first PRACH resource set by $(s_n + \Delta s)$ mod 10 subframes, the $s_n$ indicates subframes that the ROs in the first PRACH resource set are in, the $\Delta y$ is an integer, and the $\Delta s$ is an integer.

32. The method according to any one of claims 29 to 31, wherein the first PRACH resource set is a part or all of a PRACH resource associated with a first synchronization signal block SSB, and the first SSB is an SSB configured by the network device for the terminal device.

33. The method according to any one of claims 29 to 32, wherein the first PRACH resource set is a part of a PRACH resource configured by the network device for the terminal device.

34. A communication apparatus, comprising a module or a unit configured to perform the method according to any one of claims 1 to 6, or comprising a module or a unit configured to perform the method according to any one of claims 7 to 9, or comprising a module or a unit configured to perform the method according to any one of claims 10 to 17, or comprising a module or a unit configured to perform the method according to any one of claims 18 to 23, or comprising a module or a unit configured to perform the method according to any one of claims 24 to 28, or comprising a module or a unit configured to perform the method according to any one of claims 29 to 33.

35. A communication system, comprising a terminal device and a network device, wherein
the terminal device is configured to perform the method according to any one of claims 1 to 6, and the network device is configured to perform the method according to any one of claims 7 to 9; or the terminal device is configured to perform the method according to any one of claims 10 to 17, and the network device is configured to perform the method according to any one of claims 18 to 23; or the terminal device is configured to perform the method according to any one of claims 24 to 28, and the network device is configured to perform the method according to any one of claims 29 to 33.

FIG. 1

FIG. 2

FIG. 3

FIG. 4

| Network device | | Terminal device |
|---|---|---|

S510: First indication information, where the first indication information indicates a first time domain resource, and the first time domain resource includes a time domain resource used by the network device for at least one of data channel transmission or control channel transmission

S530: Determine a first RO based on the first indication information and a first PRACH resource set

S520: Send a preamble on the first RO, where the first RO is an RO that is in the first PRACH resource set and that meets a first condition, the first condition is that a first time unit is in a first time window, the first time window is a window for monitoring a PDCCH that corresponds to an RAR that responds to the preamble, and the first time unit is a time unit that is in the first time domain resource and that can be used for transmission of the PDCCH corresponding to the RAR

FIG. 5

Available time domain resource

Pattern 0

Pattern 1

Pattern 2

FIG. 6

FIG. 7

| Network device | | Terminal device |
|---|---|---|

S810: First indication information, where the first indication information indicates a first time domain resource, and the first time domain resource includes a time domain resource used by the network device for at least one of data channel transmission or control channel transmission

S820: Send a preamble on a first RO, where the first RO is an RO in a first PRACH resource set

S830: Send, in a second time window, a PDCCH for an RAR that responds to the preamble, where a start location of the second time window is a start location of a first time unit, and the first time unit is a time unit that is after the first RO in the first time domain resource

FIG. 8

Available time domain resource of the network device

Location #1          Location #2

Network device

Terminal device

RO #1        RO #2        ...

Window #1              Window #2

Time domain

FIG. 9

Network device

Terminal device

S1010: First information, where the first information indicates a first PRACH resource set and a time domain offset value

S1030: Determine a second PRACH resource set, where the second PRACH resource set is a corresponding PRACH resource set that is obtained by offsetting ROs in the first PRACH resource set based on the time domain offset value

S1020: Send a preamble on a second RO, where the second RO is a corresponding RO that is obtained by offsetting a first RO in the first PRACH resource set based on the time domain offset value

FIG. 10

Available slot of a network device

| System frame number | 0 | | | | | | | | | | 1 | | | | | | | | | |
|---|---|---|---|---|---|---|---|---|---|---|---|---|---|---|---|---|---|---|---|---|
| Subframe number | 0 | 1 | 2 | 3 | 4 | 5 | 6 | 7 | 8 | 9 | 0 | 1 | 2 | 3 | 4 | 5 | 6 | 7 | 8 | 9 |
| Slot number | 0 1 | 2 3 | 4 5 | 6 7 | 8 9 | 10 11 | 12 13 | 14 15 | 16 17 | 18 19 | 0 1 | 2 3 | 4 5 | 6 7 | 8 9 | 10 11 | 12 13 | 14 15 | 16 17 | 18 19 |
| | D S | U U | U D | S U | U U | D S | U U | U D | S U | U U | D S | U U | U D | S U | U U | D S | U U | U D | S U | U U |

RO: RO #1, RO #2, RO #3, RO #4

RO obtained through offsetting: RO #5, RO #6

A frame offset value is 1, and a subframe offset value is 0

The frame offset value is 1, and the subframe offset value is 5

FIG. 11

Communication apparatus 200

Communication unit 210

Processing unit 220

FIG. 12

Communication apparatus 300

Processing circuit 310

Memory 330

Transceiver circuit 320

FIG. 13

## INTERNATIONAL SEARCH REPORT

| International application No. |
| --- |
| **PCT/CN2024/121265** |

| A. | CLASSIFICATION OF SUBJECT MATTER |
| --- | --- |
| | H04W 72/0446(2023.01)i |

According to International Patent Classification (IPC) or to both national classification and IPC

| B. | FIELDS SEARCHED |
| --- | --- |

Minimum documentation searched (classification system followed by classification symbols)

    IPC:H04L H04W

Documentation searched other than minimum documentation to the extent that such documents are included in the fields searched

Electronic data base consulted during the international search (name of data base and, where practicable, search terms used)

    CNTXT, VEN, DWPI, ENTXTC, CNKI, 3GPP: 随机接入, 失败, 时域, 复用, 竞争, 冲突, 不可用, 前导, 随机接入时机, 随机接入相应, 时间窗口, 周期, 图样, random access, failure, multiplex, competition, conflict, unavailable, preamble, RO, random access channel occasion, RAR, response, time window, slot, period, pattern.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021142807 A1 (GUANGDONG OPPO MOBILE TELECOMMUNICATIONS CORP., LTD.) 22 July 2021 (2021-07-22)<br>entire document | 1-35 |
| A | CN 110167164 A (HUAWEI TECHNOLOGIES CO., LTD.) 23 August 2019 (2019-08-23)<br>entire document | 1-35 |
| A | CN 111757488 A (ZTE CORP.) 09 October 2020 (2020-10-09)<br>entire document | 1-35 |
| A | CN 116073967 A (BEIJING UNISOC COMMUNICATIONS TECHNOLOGY CO., LTD.)<br>05 May 2023 (2023-05-05)<br>entire document | 1-35 |
| A | CN 116746270 A (SAMSUNG ELECTRONICS CO., LTD.) 12 September 2023<br>(2023-09-12)<br>entire document | 1-35 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 November 2024** | **30 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/121265** |

### C.    DOCUMENTS CONSIDERED TO BE RELEVANT

| Category* | Citation of document, with indication, where appropriate, of the relevant passages | Relevant to claim No. |
|---|---|---|
| A | ZTE. "R1-2105189, Discussion on Timing Relationship for NR-NTN" *3GPP tsg_ran\wg1_rl1*, 12 May 2021 (2021-05-12), entire document | 1-35 |

Form PCT/ISA/210 (second sheet) (July 2022)

**INTERNATIONAL SEARCH REPORT**
Information on patent family members

International application No.

**PCT/CN2024/121265**

| Patent document cited in search report | | | Publication date (day/month/year) | Patent family member(s) | | | Publication date (day/month/year) |
|---|---|---|---|---|---|---|---|
| WO | 2021142807 | A1 | 22 July 2021 | EP | 4090120 | A1 | 16 November 2022 |
| | | | | EP | 4090120 | A4 | 04 January 2023 |
| | | | | US | 2022346158 | A1 | 27 October 2022 |
| CN | 110167164 | A | 23 August 2019 | EP | 3742848 | A1 | 25 November 2020 |
| | | | | EP | 3742848 | A4 | 17 February 2021 |
| | | | | WO | 2019158099 | A1 | 22 August 2019 |
| | | | | US | 2021084687 | A1 | 18 March 2021 |
| | | | | US | 11546944 | B2 | 03 January 2023 |
| | | | | CA | 3091093 | A1 | 22 August 2019 |
| | | | | KR | 20200116510 | A | 12 October 2020 |
| | | | | KR | 102519984 | B1 | 11 April 2023 |
| CN | 111757488 | A | 09 October 2020 | None | | | |
| CN | 116073967 | A | 05 May 2023 | None | | | |
| CN | 116746270 | A | 12 September 2023 | US | 2022210844 | A1 | 30 June 2022 |
| | | | | EP | 4272505 | A1 | 08 November 2023 |
| | | | | WO | 2022146102 | A1 | 07 July 2022 |
| | | | | KR | 20230125228 | A | 29 August 2023 |
| | | | | US | 2024129959 | A1 | 18 April 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311261031